# FASCICULE DE BREVET EUROPEEN

(11) **EP 4 313 579 B1**
(45) Date de publication et mention de la délivrance du brevet: **25.12.2024**
(21) Numéro de dépôt: 22718248.2
(22) Date de dépôt: 23.03.2022
(51) Int. Cl.: B32B 3/06, B60J 10/70, B32B 17/10, B60J 1/00, B60J 1/06

(54) **VITRAGE COMPORTANT DEUX VITRES ET UN JOINT D'ASSEMBLAGE DESDITES VITRES**
VERGLASUNGSEINHEIT MIT ZWEI GLASSCHEIBEN UND EINER VERBINDUNG ZUM ZUSAMMENBAU DER GLASSCHEIBEN
GLAZING UNIT COMPRISING TWO GLASS PANES AND A JOINT FOR ASSEMBLING SAID GLASS PANES

(30) Priorité: 25.03.2021 FR 2103024
(43) Date de publication de la demande: 07.02.2024
(73) Titulaire: Saint-Gobain Glass France, 92400 Courbevoie (FR)
(72) Inventeur: LAMOUREUX, Laurent, 60150 RIBECOURT-DRESLINCOURT (FR); BERTHE, Frédéric, 60170 CAMBRONNE LES RIBECOURT (FR)
(74) Mandataire: Saint-Gobain Recherche
(86) Numéro de dépôt international: PCT/FR2022/050537
(87) Numéro de publication internationale: WO 2022/200734

(56) Documents cités:
- WO-A1-2021/009356
- US-A- 5 060 440

## Description

L'invention concerne un vitrage de moyen de transport, notamment de véhicule, et en particulier de véhicule automobile, comprenant deux vitres contiguës et un joint, au moins l'une des vitres étant feuilletée.

Il est connu de l'art antérieur des vitrages comprenant une première vitre et une seconde vitre assemblées côte à côte afin de ne former au final qu'un seul vitrage. Un tel assemblage présente un intérêt lorsque l'on souhaite obtenir un vitrage de forme complexe. Il peut s'agir, par exemple, d'un vitrage pour un véhicule automobile présentant un bombage important selon un premier axe de courbure et un bombage très faible selon un second axe, perpendiculaire au premier. Un tel vitrage comporte par exemple, à la fois le pare-brise et une vitre de toit panoramique du véhicule, ou à la fois le pare-brise et des vitres latérales avant fixes du véhicule ou encore à la fois une vitre de toit et une vitre arrière fixe du véhicule. Les procédés de bombage mis en oeuvre dans l'industrie verrière permettent d'obtenir un vitrage en une seule pièce présentant un bombage relativement faible. Pour des vitrages présentant des bombages relativement importants, il est préférable d'assembler une première vitre et une seconde vitre au moyen d'un dispositif d'assemblage afin d'en simplifier la production.

L'art antérieur connaît des solutions de juxtaposition de vitres, et notamment pour des véhicules, pour lesquelles une première vitre et une seconde vitre juxtaposée ou contigüe à la première sont assemblées côte à côte grâce à un système d'assemblage.

La demande internationale de brevet N°WO 2006/064153 expose un système d'assemblage dans lequel une portion de profilé rigide est fixée à une première vitre et présente une partie en saillie pour réaliser un appui pour le second élément vitré. Dans la pratique, ce profilé, du fait de sa rigidité, est difficile à mettre en oeuvre et ne peut convenir que lorsque les bords adjacents des vitres sont complètement rectilignes.

La demande internationale de brevet N° WO 2018/178574 divulgue une autre solution pour un tel vitrage à première vitre et seconde vitre assemblées côte à côte. Il comprend deux vitres contigües et deux corps profilés de joint disposés en vis-à-vis et situés chacun au contact contre une partie du chant d'une desdites vitres. Le vitrage comporte en outre un, voire deux, revêtement(s) extérieur(s) souple(s) présentant une face extérieure disposée dans la continuité d'une face extérieure de la vitre. Ainsi, le vitrage comporte une jonction affleurante sur sa face extérieure améliorant par conséquent son esthétique. L'inconvénient de la configuration décrite dans ce document est que la face intérieure du vitrage présente une protubérance disgracieuse due au moyen d'assemblage mis en oeuvre. En outre, l'assemblage nécessite des opérations de collage contraignantes pouvant engendrées des problèmes d'étanchéité.

La demande internationale de brevet N° WO 2021/09356 divulgue un vitrage comprenant une première vitre et une seconde vitre contiguës avec un joint simple entre les vitres. La tenue mécanique de ce vitrage pourrait être améliorée.

Un but de l'invention est de pallier les inconvénients de l'art antérieur en proposant un vitrage comportant deux vitres simples à assembler l'une avec l'autre et présentant une esthétique améliorée tout en présentant une tenue mécanique élevée.

La présente invention est particulièrement appropriée lorsque les bords en vis-à-vis des vitres sont courbes.

Pour ce faire, l'invention se rapporte ainsi, dans son acceptation la plus large, à un vitrage de moyen de transport, notamment de véhicule, selon la revendication 1.

Ce vitrage comprend une première vitre et une seconde vitre contiguës, la seconde vitre étant feuilletée et comporte une feuille de verre extérieure, une feuille de verre intérieure et une feuille intercalaire en matière plastique disposée entre ladite feuille de verre extérieure et ladite feuille de verre intérieure, ledit vitrage présentant une face extérieure et une face intérieure, un chant de la feuille intercalaire de ladite seconde vitre étant en retrait par rapport à un chant de la feuille de verre extérieure de ladite seconde vitre.

Ledit vitrage comporte un joint agencé entre ladite première vitre et ladite seconde vitre en adhérant à un chant de ladite feuille de verre extérieure de la seconde vitre et un chant de ladite première vitre et présentant une face extérieure et une face intérieure, la face extérieure dudit vitrage et la face extérieure dudit joint étant affleurantes (« flush » en anglais).

Ledit joint est en contact avec une face intérieure de la feuille de verre extérieure de ladite seconde vitre.

Par « affleurantes » au sens de la présente invention, il faut comprendre qu'à la jonction entre la première vitre et la seconde vitre, vue en coupe transversale, de l'espace extérieur, il n'y a aucun élément de vitrage, et notamment aucun élément du joint, plus à l'extérieur qu'une ligne d'affleurement joignant la face extérieure de la première vitre et la face extérieure de la seconde vitre.

Dans certaines variantes, à la jonction entre la première vitre et la seconde vitre, vue en coupe transversale, de l'espace intérieur, il n'y a aucun élément de vitrage, et notamment aucun élément du joint, plus à l'intérieur qu'une ligne d'affleurement joignant la face intérieure de la première vitre et la face intérieure de la seconde vitre.

La, ou chaque, ligne d'affleurement est droite ou courbe ; elle est dans la continuité de la courbure de chaque face en se rejoignant au milieu de l'espace inter-vitre.

Ainsi, ledit joint présente une face extérieure qui réalise la jonction entre une arête extérieure de ladite première vitre et une arête extérieure de ladite seconde vitre et en outre, dans certaines variantes, ledit joint présente une face intérieure qui réalise la jonction entre une arête intérieure de ladite première vitre et une arête intérieure de ladite seconde vitre. Le vitrage est ainsi conçu de telle sorte qu'à l'état installé, dans le véhicule, aucun montant de carrosserie, ni aucun élément de cache n'est installé en vis-à-vis de la face extérieure dudit joint et plus à l'extérieur, ni, dans certaines variantes en vis-à-vis de la face intérieure dudit joint et plus à l'intérieur.

La face extérieure dudit joint et, dans certaines variantes, la face intérieure dudit joint peuvent être appelées « libres » car elles sont visibles respectivement d'un espace extérieur au véhicule et d'un espace intérieur du véhicule. Cette liberté des faces extérieures et intérieures dudit joint est une donnée prévue dès la conception du vitrage ; elle est visible sur le plan de conception du véhicule et sur le plan de conception du vitrage du véhicule.

Dans certaines autres variantes, le vitrage comporte un cordon de colle unique sous la face intérieure dudit joint. Ce cordon de colle est visible sur le plan de conception du véhicule et sur le plan de conception du vitrage du véhicule. Il sert à coller le vitrage en une seule bande le long d'un montant de carrosserie ou le long d'un cache intérieur.

Ce joint est un simple joint de liaison, assurant l'étanchéité entre les chants en vis-à-vis des première et seconde vitres ; ce n'est pas un profilé d'appui rigide, comme dans la demande internationale de brevet N°WO 2006/064153 ; il est plus simple à concevoir, plus simple à mettre en oeuvre, et en particulier peut être courbe selon sa longueur (en vis-à-vis de la longueur des chants de la première vitre et de la seconde vitre).

Ledit joint est de préférence constitué d'une seule matière entre sa face extérieure et sa face intérieure ; cette matière peut être multi-composant dans le sens où son analyse chimique peut révéler la présence de plusieurs composants chimiques ; toutefois, l'analyse matérielle du joint conduit à considérer qu'il est constitué d'un seul matériau.

De préférence, ledit joint comporte un insert ; cet insert étant en un matériau différent, et de préférence en un matériau avec un module d'Young plus élevé que la matière du joint.

Avantageusement, ledit insert est en un matériau métallique ou plastique, de préférence renforcé par des fibres et notamment des fibres de verre ou de carbone.

Dans une variante, ledit insert présente une forme en T, avec le tronc du T situé entre la première vitre et la seconde vitre.

De préférence, lorsque le vitrage comporte un cordon de colle unique et un insert, ce cordon de colle est situé en vis-à-vis de l'insert afin d'augmenter la tenue mécanique.

De préférence, la face intérieure dudit vitrage et la face intérieure dudit joint sont affleurantes.

De préférence, ladite première vitre est feuilletée et comporte une feuille de verre extérieure, une feuille de verre intérieure et une feuille intercalaire en matière plastique disposée entre ladite feuille de verre extérieure et ladite feuille de verre intérieure ; ladite feuille de verre extérieure de ladite première vitre présente une face intercalaire, ladite feuille de verre extérieure de ladite seconde vitre présente une face intercalaire.

Ledit joint est, de préférence, en contact avec une face intérieure de la feuille de verre extérieure de ladite première vitre, feuilletée.

Ledit insert présente, de préférence une face disposée en vis-à-vis d'une face intercalaire de la feuille de verre extérieure de ladite seconde vitre, feuilletée, et de préférence en outre en vis-à-vis d'une face intercalaire de la feuille de verre extérieure de ladite première vitre, feuilletée.

De préférence, ledit vitrage comporte au moins un moyen d'adhésion agencé entre ladite face dudit insert et lesdites faces intercalaires.

De préférence, ledit moyen d'adhésion comporte un adhésif double face ou un polymère tel que du polyuréthane.

De préférence, ladite première vitre est monolithique et présente une face intérieure et ladite feuille de verre extérieure de ladite seconde vitre présente une face intercalaire, ledit insert présentant une face disposée en vis-à-vis de ladite face intérieure de la première vitre et de ladite face intercalaire de ladite seconde vitre.

De préférence, ladite première vitre est monolithique et comporte un joint encapsulé comprenant ledit insert.

Lorsqu'une vitre est feuilletée, la feuille la plus à l'extérieur et la feuille la plus à l'intérieur sont, de préférence, en verre ; lorsqu'une vitre est monolithique, elle peut être en verre ou en matière plastique, comme par exemple en, ou à base de, polycarbonate.

Le vitrage selon l'invention peut permettre de réaliser, à la fois le pare-brise et une vitre de toit panoramique d'un véhicule, ou à la fois le pare-brise et des vitres latérales avant fixes d'un véhicule ou encore à la fois une vitre de toit et une vitre arrière fixe d'un véhicule, ou encore les combinaisons de ces possibilités.

On décrira ci-après, à titre d'exemples non limitatifs, plusieurs formes d'exécution de la présente invention, en référence aux figures annexées sur lesquelles :
[Fig.1] illustre schématiquement une vue en coupe d'un vitrage comportant une première vitre feuilletée et une seconde vitre feuilletée, selon un premier mode de réalisation de l'invention ;
[Fig.2] illustre schématiquement une vue en coupe d'un vitrage comportant une première vitre monolithique et une seconde vitre feuilletée, selon un deuxième mode de réalisation de l'invention ;
[Fig.3] représente schématiquement une vue en coupe d'un vitrage comportant une première vitre feuilletée, une seconde vitre feuilletée et un insert, selon un troisième mode de réalisation de l'invention ;
[Fig.4] représente schématiquement une vue en coupe d'un vitrage comportant une première vitre feuilletée, une seconde vitre feuilletée et un insert, selon un quatrième mode de réalisation de l'invention ;
[Fig.5] illustre de manière schématique une vue en coupe d'un vitrage comportant une première vitre feuilletée, une seconde vitre feuilletée et un insert, selon un cinquième mode de réalisation de l'invention ;
[Fig.6] représente schématiquement une vue en coupe d'un vitrage comportant une première vitre monolithique, une seconde vitre feuilletée et un insert, selon un sixième mode de réalisation de l'invention ;
[Fig.7] représente schématiquement une vue en coupe d'un vitrage comportant une première vitre monolithique, une seconde vitre feuilletée et un insert, selon un septième mode de réalisation de l'invention ;
[Fig.8] représente schématiquement une vue en coupe du quatrième mode de réalisation de l'invention avec un insert à système de liaison mécanique ; et
[Fig.9] représente schématiquement une vue en coupe du quatrième mode de réalisation de l'invention avec un cordon de colle unique.

La présente invention est décrite à titre d'exemple dans le cadre d'une application comme vitrage de véhicule. Ce vitrage ferme une baie en réalisant une séparation entre un espace extérieur E, qui est extérieur au véhicule, et un espace intérieur I, qui est intérieur au véhicule. Les notions de « extérieur » et « intérieur » sont donc considérées par rapport, respectivement, à l'espace extérieur E et l'espace intérieur I.

La présente invention est décrite, à titre d'exemple non limitatif, en étant appliquée à un vitrage de pare-brise et de toit panoramique de véhicule, et notamment de véhicule automobile. Ainsi, dans les figures illustratives, le vitrage est représenté schématiquement, dans des vues en coupe verticales, à l'état installé dans une baie de carrosserie (non visible). Le vitrage comporte deux vitres disposées côté à côté ou, plus précisément encore, l'une devant l'autre lorsque le sens d'avancé du véhicule est considéré.

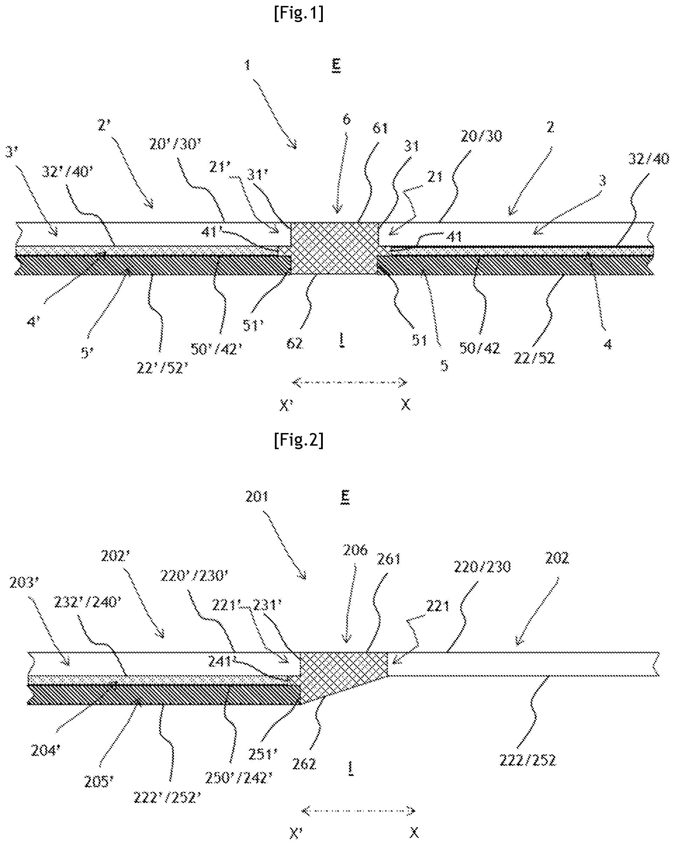

Dans le cadre du présent document, les figures 1 à 7 montrent l'axe longitudinal central d'avancé du véhicule équipé du vitrage selon l'invention en tant que vitrage de pare-brise et de toit, généralement appelé l'axe X-X' du véhicule.

En référence à la figure 1, il est illustré schématiquement en coupe transversale verticale un vitrage 1 comprenant une première vitre 2 et une seconde vitre 2', selon un premier mode de réalisation de la présente invention. Chaque vitre 2, 2' présente ainsi une face extérieure 20, 20' orientée vers l'espace extérieur E, une face intérieure 22, 22' orientée vers l'espace intérieur I et un chant 21, 21' périphérique, situé entre ces deux faces. Chacune des deux vitres 2, 2' du vitrage 1 est, préférentiellement, une vitre feuilletée qui comporte, de l'extérieur vers l'intérieur, au moins : une feuille de verre extérieure 3, 3', une feuille intercalaire de matière plastique 4, 4' et une feuille de verre intérieure 5, 5' ; toutefois, il est possible qu'au moins une autre feuille soit intercalée entre la feuille de verre extérieure 3, 3' et la feuille intercalaire de matière plastique 4, 4' ou entre la feuille intercalaire de matière plastique 4, 4' et la feuille de verre intérieure 5, 5'. Il est représenté des chants 21, 21' droits. En alternative, les chants 21, 21' sont arrondis. Chaque feuille de verre extérieure 3, 3' présente une face extérieure 30, 30' qui est orientée vers l'espace extérieur E et correspondant ainsi à la face extérieure 20, 20' de la vitre 2, 2', une face intercalaire 32, 32' qui est orientée vers la feuille intercalaire de matière plastique 4, 4', et un chant 31, 31' situé entre ces deux faces.

Chaque feuille de verre intérieure 5, 5' présente une face intercalaire 50, 50' qui est orientée vers la feuille intercalaire de matière plastique 4, 4', une face intérieure 52, 52' qui est orientée vers l'espace intérieur I et correspondant ainsi à la face intérieure 22, 22' de la vitre 2, 2', et un chant 51, 51' situé entre ces deux faces.

Chaque feuille intercalaire de matière plastique 4, 4' présente une face intercalaire extérieure 40, 40' qui est orientée vers la face intercalaire 32, 32' et qui est ici au contact de cette face intercalaire 32, 32', une face intercalaire intérieure 42, 42' qui est orientée vers la face intercalaire 50, 50' et qui est ici au contact de cette face intercalaire 50, 50', ainsi qu'un chant 41, 41' qui est situé entre ces deux faces intercalaires 40, 42 et 40', 42'.

Le vitrage est un vitrage feuilleté dans le sens où il n'y a pas d'espace gazeux ou d'espace vide entre les feuilles qui le constituent dans la direction transversale extérieur - intérieure.

Chaque vitre 2, 2' présente ainsi une face extérieure réalisée par la face extérieure 30, 30' de la feuille de verre extérieure 3, 3', une face intérieure réalisée par la face intérieure 52, 52' de la feuille de verre intérieure 5, 5' et un chant situé entre ces deux faces, correspondant au chant 31, 31' de la feuille de verre extérieure 3, 3' et au chant 51, 51' de la feuille de verre intérieure 5, 5', ces deux chants (d'une part 31, 51 et d'autre part 31', 51') étant ici dans la continuité l'un de l'autre tout en étant séparés par un espace correspondant à l'épaisseur de la feuille de matière plastique 4, 4'.

Le chant 41' de la feuille intercalaire 4' de la seconde vitre 2', feuilletée, est, de préférence, en retrait par rapport au chant 31' de la feuille de verre extérieure 3' de la seconde vitre 2' ; le chant 41 de la feuille intercalaire 4 de la première vitre 2, feuilletée est, de préférence, en retrait par rapport au chant 31 de la feuille de verre extérieure 3 de la première vitre 2. Ce retrait du chant 41, 41' de la feuille intercalaire 4, 4' par rapport au chant 31, 31' de la feuille de verre extérieure 3, 3' est de préférence d'au moins 1,0 mm ; il peut être entre 1,0 mm et 20,0 mm, voire entre 2,0 et 5,0 mm.

La vitre adjacente 2' présente, de préférence, une épaisseur identique à la vitre 2 afin de faciliter le positionnement de l'une par rapport à l'autre lors de l'assemblage et de la fabrication du vitrage 1.

Le vitrage 1 comporte en outre un joint 6. Le joint 6 est en matière plastique et est réalisé après la fabrication des vitres 2, 2' de façon à obtenir leur assemblage d'une manière contiguë pour former le vitrage 1. La matière du joint 6 peut être un adhésif thermofusible, du polybutyral de vinyle, connu également sous l'acronyme PVB, de l'éthylène acétate de vinyle, connu également sous l'acronyme EVA ou du polyuréthane, connu également sous l'acronyme PU. Le joint 6 présente une face extérieure 61, orientée vers l'espace extérieur E, et une face intérieure 62, orientée vers l'espace intérieur I. La face extérieure 61 est sensiblement affleurante avec la face extérieure 20 de la vitre 2 et avec la face extérieure 20' de la vitre 2'. Ainsi, la face extérieure 61 est sensiblement dans la continuité des faces extérieures 20, 20' de deux vitres 2, 2'. La face extérieure 61 ne dépasse pas plus à l'extérieur que les faces extérieures 20, 20' des deux vitres 2, 2'. Cette configuration est également dénommée « flush » en anglais. L'écart entre la face extérieure 61 et les faces extérieures 20, 20' de deux vitres 2, 2' est compris entre 0 et 0,5 mm. En outre, la face intérieure 62 est sensiblement affleurante avec la face intérieure 22 de la vitre 2 et avec la face intérieure 22' de la vitre 2'. Ainsi, la face intérieure 62 est sensiblement dans la continuité des faces intérieures 22, 22' de deux vitres 2, 2'. La face intérieure 62 ne dépasse pas plus à l'intérieur que les faces intérieures 22, 22' des deux vitres 2, 2'. L'écart entre la face intérieure 62 et les faces intérieures 22, 22' de deux vitres 2, 2' est compris entre 0 et 0,5 mm.

Le vitrage 1, selon l'invention, a pour avantage de présenter une jonction plus discrète que les vitrages de l'art antérieur. L'esthétique est par conséquent améliorée.

Par ailleurs, l'assemblage de deux vitres 2, 2' est simple à mettre en oeuvre. Il est également possible de former un vitrage 1 présentant des formes relativement complexes. Dans le premier mode de réalisation de l'invention, le vitrage 1 comprend deux vitres 2, 2', mais l'invention peut s'appliquer à un nombre de vitres supérieur à deux.

Comme expliqué ci-après, le joint peut comporter un insert et cet insert peut être en un matériau métallique ou plastique, de préférence renforcé par des fibres et notamment des fibres de verre ou de carbone. Toutefois, le joint peut aussi être constitué d'une seule matière entre sa face extérieure et sa face intérieure ; cette matière peut être multi-composant dans le sens où son analyse chimique peut révéler la présence de plusieurs composants chimiques ; toutefois, l'analyse matérielle du joint conduit à considérer qu'il est constitué d'un seul matériau.

Le joint peut être réalisé en matière translucide, voire transparente.

Comme détaillé en outre ci-après, le vitrage peut comporter au moins un moyen d'adhésion agencé entre une face de l'insert et des faces intercalaires des vitres intérieures et/ou des faces intérieures de vitres intérieures. Ce moyen d'adhésion peut comporter un adhésif double face ou un polymère tel que du polyuréthane.

Grâce au retrait du chant 41' de la feuille intercalaire 4' de la seconde vitre 2', feuilletée, le joint 6 est en contact avec la face intérieure 32' de la feuille de verre extérieure 3' de la seconde vitre 2' ; le joint 6 pénètre ainsi dans le volume créé grâce au retrait et la tenue mécanique du joint, et ainsi du vitrage, en est renforcée.

En outre, le chant 41' de la feuille intercalaire 4' de la seconde vitre 2', feuilletée, est, de préférence, en retrait par rapport au chant 51' de la feuille de verre intérieure 5' de la seconde vitre 2' ; ainsi, le joint 6 est en contact avec la face intercalaire 50' de la feuille de verre intérieure 5' de la seconde vitre 2' et la tenue mécanique du joint, et ainsi du vitrage, en est renforcée.

Grâce au retrait du chant 41 de la feuille intercalaire 4 de la première vitre 2, feuilletée, le joint 6 est en contact avec la face intérieure 32 de la feuille de verre extérieure 3 de la seconde vitre 2 ; le joint 6 pénètre ainsi dans le volume créé grâce au retrait et la tenue mécanique du joint, et ainsi du vitrage, en est renforcée.

En outre, le chant 41 de la feuille intercalaire 4 de la première vitre 2, feuilletée est, de préférence, en retrait par rapport au chant 51 de la feuille de verre intérieure 5 de la première vitre 2 ; ainsi, le joint 6 est en contact avec la face intercalaire 50 de la feuille de verre intérieure 5 de la première vitre 2 et la tenue mécanique du joint, et ainsi du vitrage, en est renforcée.

Le retrait du chant 41, 41' de la feuille intercalaire 4, 4' par rapport au chant 51, 51' de la feuille de verre intérieure 5, 5' est de préférence d'au moins 1,0 mm ; il peut être entre 1,0 mm et 20,0 mm, voire entre 2,0 et 5,0 mm. Dans une configuration particulière, le retrait du chant 41, 41' de la feuille intercalaire 4, 4' par rapport au chant 31, 31' est identique au retrait du chant 41, 41' de la feuille intercalaire 4, 4' par rapport au chant 51, 51' de la feuille de verre intérieure 5, 5'.

En référence à la figure 2, il est illustré de manière schématique un vitrage 201 comprenant une première vitre 202 et une seconde vitre 202', selon un deuxième mode de réalisation de la présente invention. La première vitre 202 est une feuille de verre monolithique comportant une face extérieure 220 orientée vers l'espace extérieur E, une face intérieure 222 vers l'espace intérieur I et un chant 221 périphérique situé entre ces deux faces. La deuxième vitre 202' est une vitre feuilletée comportant une face extérieure 220' orientée vers l'espace extérieur E, une face intérieure 222' vers l'espace intérieur I et un chant 221' périphérique situé entre ces deux faces. La deuxième vitre 202' est une vitre feuilletée et comporte, de l'extérieur vers l'intérieur, au moins : une feuille de verre extérieure 203', une feuille intercalaire de matière plastique 204' et une feuille de verre intérieure 205' ; toutefois, il est possible qu'au moins une autre feuille soit intercalée entre la feuille de verre extérieure 203' et la feuille intercalaire de matière plastique 204' ou entre la feuille intercalaire de matière plastique 204' et la feuille de verre intérieure 205'. Il est représenté des chants 221, 221' droits. En alternative, les chants 221, 221' sont arrondis. La feuille de verre extérieure 203' présente une face extérieure 230' qui est orientée vers l'espace extérieur E et correspondant ainsi à la face extérieure 220' de la vitre 202', une face intercalaire 232' qui est orientée vers la feuille intercalaire de matière plastique 204', et un chant 231' situé entre ces deux faces.

La feuille de verre intérieure 205' présente une face intercalaire 250' qui est orientée vers la feuille intercalaire de matière plastique 204', une face intérieure 252' qui est orientée vers l'espace intérieur I et correspondant ainsi à la face intérieure 222' de la vitre 202', et un chant 251' situé entre ces deux faces.

La feuille intercalaire de matière plastique 204' présente une face intercalaire extérieure 240' qui est orientée vers la face intercalaire 232' et qui est ici au contact de cette face intercalaire 232', une face intercalaire intérieure 242' qui est orientée vers la face intercalaire 250' et qui est ici au contact de cette face intercalaire 250', ainsi qu'un chant 241' qui est situé entre ces deux faces intercalaires 240', 242'.

Une vitre est dite « feuilletée » dans le sens où il n'y a pas d'espace gazeux ou d'espace vide entre les au moins trois feuilles qui la constituent dans la direction transversale extérieur - intérieur.

La vitre 202' présente ainsi une face extérieure réalisée par la face extérieure 230' de la feuille de verre extérieure 203', une face intérieure réalisée par la face intérieure 252' de la feuille de verre intérieure 205' et un chant situé entre ces deux faces, correspondant au chant 231' de la feuille de verre extérieure 203' et au chant 251' de la feuille de verre intérieure 205', ces deux chants étant ici dans la continuité l'un de l'autre tout en étant séparés par un espace correspondant à l'épaisseur de la feuille de matière plastique 204'.

Le vitrage 201 comporte en outre un joint 206. Le joint 206 est en matière plastique et est réalisé après la fabrication des vitres 202, 202' de façon à obtenir leur assemblage d'une manière contiguë pour former le vitrage 201. La matière du joint 206 peut être un adhésif thermofusible, du polybutyral de vinyle, connu également sous l'acronyme PVB, de l'éthylène acétate de vinyle, connu également sous l'acronyme EVA ou du polyuréthane, connu également sous l'acronyme PU. Le joint 206 présente une face extérieure 261, orientée vers l'espace extérieur E, et une face intérieure 262, orientée vers l'espace intérieur I. La face extérieure 261 est sensiblement affleurante avec la face extérieure 220 de la vitre 202 et avec la face extérieure 220' de la vitre 202'. Ainsi, la face extérieure 261 est sensiblement dans la continuité des faces extérieures 220, 220' de deux vitres 202, 202'. La face extérieure 261 ne dépasse pas plus à l'extérieur que les faces extérieures 220, 220' des deux vitres 202, 202'. L'écart entre la face extérieure 261 et les faces extérieures 220, 220' de deux vitres 202, 202' est compris entre 0 et 0,5 mm.

La face intérieure 262 du joint 206 présente une inclinaison de sorte qu'elle soit sensiblement dans la continuité des faces intérieures 222, 222' de deux vitres 202, 202'. Le joint 206, du fait de l'inclinaison de la face intérieure 262, permet de relier la face intérieure 222 de la première vitre 202 et la face intérieure 222' de la seconde vitre 202'. Bien que les épaisseurs des première et seconde vitres 202, 202' soient différentes, le joint 206 a pour avantage d'assurer une continuité entre leurs faces intérieurs 222, 222' respectives. Le vitrage 201 a pour avantage de présenter une jonction plus esthétique entre une vitre monolithique et une vitre feuilletée.

Sur cette figure 2, comme seule la seconde vitre 202' est feuilletée, seul le chant 241' de la feuille intercalaire est en retrait par rapport au chant 231' de la feuille de verre extérieure 3' de la seconde vitre 202' ; ce chant 241' de la feuille intercalaire est, de préférence en outre en retrait par rapport au chant 251' de la feuille de verre intérieure ; le joint 206 pénètre ainsi dans le volume créé grâce au retrait et la tenue mécanique du joint, et ainsi du vitrage, en est renforcée.

Dans une configuration particulière, le retrait du chant 41' de la feuille intercalaire 4' par rapport au chant 31' est identique au retrait du chant 41' de la feuille intercalaire 4' par rapport au chant 51' de la feuille de verre intérieure 5'.

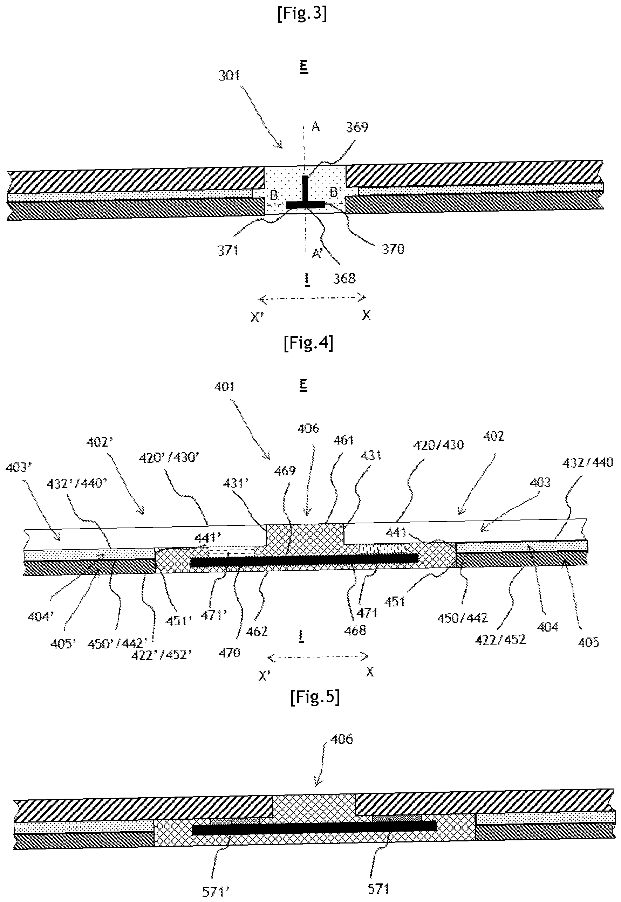

En référence à la figure 3, il est illustré schématiquement un vitrage 301 selon un troisième mode de réalisation de la présente invention. Ce troisième mode de réalisation est une alternative au premier mode de réalisation de l'invention. Par conséquent, afin d'éviter une description redondante, les éléments et références communs avec le premier mode de réalisation ne sont pas décrits à nouveau dans la description de ce troisième mode de réalisation. Ainsi, le vitrage 301 comporte en outre, par rapport au vitrage 1 décrit précédemment, un insert 368. L'insert 368 présente une forme en T, dans une vue en coupe transversale, et comprend une partie centrale 369, une première aile 370 et une seconde aile 371. La partie centrale 369 présente une forme parallélépipédique et présente un axe A-A' orienté perpendiculairement par rapport à l'axe X-X'. De préférence, l'axe A-A' est disposé sensiblement au milieu du joint 6. Dans une alternative, l'insert 368 présente une forme courbée. Les première et seconde ailes 370, 371 présentent également une forme parallélépipédique et présentent en outre un axe B-B' orienté perpendiculairement par rapport à l'axe A-A'. L'insert 368 est, par exemple, en un matériau métallique, tel que de l'aluminium, de l'acier inoxydable, ou en un matériau plastique, tel que du polyéthylène, éventuellement renforcé avec des fibres de carbone ou de verre. L'insert 368 permet d'augmenter la rigidité et la résistance du joint 6.

En référence à la figure 4, il est illustré schématiquement un vitrage 401 comprenant une première vitre 402 et une seconde vitre 402', selon un quatrième mode de réalisation de la présente invention. Chaque vitre 402, 402' est feuilletée et présente une face extérieure 420, 420' orientée vers l'espace extérieur E, une face intérieure 422, 422' vers l'espace intérieur I. Chacune des deux vitres 402, 402' du vitrage 401 est, préférentiellement, une vitre feuilletée qui comporte, de l'extérieur vers l'intérieur, au moins : une feuille de verre extérieure 403, 403', une feuille intercalaire de matière plastique 404, 404' et une feuille de verre intérieure 405, 405' ; toutefois, il est possible qu'au moins une autre feuille soit intercalée entre la feuille de verre extérieure 403, 403' et la feuille intercalaire de matière plastique 404, 404' ou entre la feuille intercalaire de matière plastique 404, 404' et la feuille de verre intérieure 405, 405'. Chaque feuille de verre extérieure 403, 403' présente une face extérieure 430, 430' qui est orientée vers l'espace extérieur E et correspondant ainsi à la face extérieure 420, 420' de la vitre 402, 402', une face intercalaire 432, 432' qui est orientée vers la feuille intercalaire de matière plastique 404, 404', et un chant 431, 431' situé entre ces deux faces.

Chaque feuille de verre intérieure 405, 405' présente une face intercalaire 450, 450' qui est orientée vers la feuille intercalaire de matière plastique 404, 404', une face intérieure 452, 452' qui est orientée vers l'espace intérieur I et correspondant ainsi à la face intérieure 422, 422' de la vitre 402, 402', et un chant 451, 451' situé entre ces deux faces.

Chaque feuille intercalaire de matière plastique 404, 404' présente une face intercalaire extérieure 440, 440' qui est orientée vers la face intercalaire 432, 432' et qui est ici au contact de cette face intercalaire 432, 432', une face intercalaire intérieure 442, 442' qui est orientée vers la face intercalaire 450, 450' et qui est ici au contact de cette face intercalaire 450, 450', ainsi qu'un chant 441, 441' qui est situé entre ces deux faces intercalaires 440, 442 et 440', 442'.

Chaque vitre 402, 402' présente ainsi une face extérieure réalisée par la face extérieure 430, 430' de la feuille de verre extérieure 403, 403', une face intérieure réalisée par la face intérieure 452, 452' de la feuille de verre intérieure 405, 405' et un chant situé entre ces deux faces, correspondant au chant 431, 431' de la feuille de verre extérieure 403, 403' et au chant 451, 451' de la feuille de verre intérieure 405, 405', ces deux chants (d'une part 431, 451 et d'autre part 431', 451') étant ici dans la continuité l'un de l'autre tout en étant séparés par un espace correspondant à l'épaisseur de la feuille de matière plastique 404, 404'.

Le vitrage 401 comporte en outre un joint 406 présentant les mêmes caractéristiques que celles décrites dans le premier mode de réalisation de l'invention. Le joint 406 présente une face extérieure 461, orientée vers l'espace extérieur E, et une face intérieure 462, orientée vers l'espace intérieur I. La face extérieure 461 est sensiblement affleurante avec la face extérieure 420 de la vitre 402 et avec la face extérieure 420' de la vitre 402'. Ainsi, la face extérieure 461 est sensiblement dans la continuité des faces extérieures 420, 420' de deux vitres 402, 402'. La face extérieure 461 ne dépasse pas plus à l'extérieur que les faces extérieures 420, 420' des deux vitres 402, 402'. L'écart entre la face extérieure 461 et les faces extérieures 420, 420' de deux vitres 402, 402' est compris entre 0 et 0,5 mm. En outre, la face intérieure 462 est sensiblement affleurante avec la face intérieure 422 de la vitre 402 et avec la face intérieure 422' de la vitre 402'. Ainsi, la face intérieure 462 est sensiblement dans la continuité des faces intérieures 422, 422' de deux vitres 402, 402'. La face intérieure 462 ne dépasse pas plus à l'intérieur que les faces intérieures 422, 422' des deux vitres 402, 402'. L'écart entre la face intérieure 462 et les faces intérieures 422, 422' de deux vitres 402, 402' est compris entre 0 et 0,5 mm.

Les chants 441, 451 de la feuille intercalaire 404 et de la feuille de verre intérieure 405 de la première vitre 402 sont en retrait par rapport au chant 431 de la feuille de verre extérieure 403 de la première vitre 402. Les chants 441', 451' de la feuille intercalaire 404' et de la feuille de verre intérieure 405' de la seconde vitre 402' sont en retrait par rapport au chant 431' de la feuille de verre extérieure 403' de la seconde vitre 402'.

Le retrait d'une part des chants 441, 451 et d'autre part des chants 441', 451' sont de préférence chacun entre 5,0 et 20,0 mm ; par exemple de 10,0 mm.

Ces retraits permettent au joint 406 d'être en contact avec les faces intérieures 432, 432' des feuilles de verre extérieures 403, 403'. Le joint 406 comporte en outre un insert 468 présentant une forme parallélépipédique. De préférence, l'épaisseur de l'insert 468 est compris entre 0,3 fois et 1 fois l'épaisseur des feuilles de verre intérieures 405, 405'. L'insert 468 présente une face extérieure 469 et une face intérieure 470. Le joint 406 comporte en outre une première couche de colle 471 agencée entre la face extérieure 469 de l'insert 468 et la face intérieure 432 de la feuille de verre extérieure 403 de la première vitre 402. Le joint 406 comporte également une seconde couche de colle 471' agencée entre la face extérieure 469 de l'insert 468 et la face intérieure 432' de la feuille de verre extérieure 403' de la seconde vitre 402'. Par exemple, la couche de colle comprend du polyuréthane (PU). Cette configuration permet de renforcer la rigidité et la résistance mécanique du joint 406.

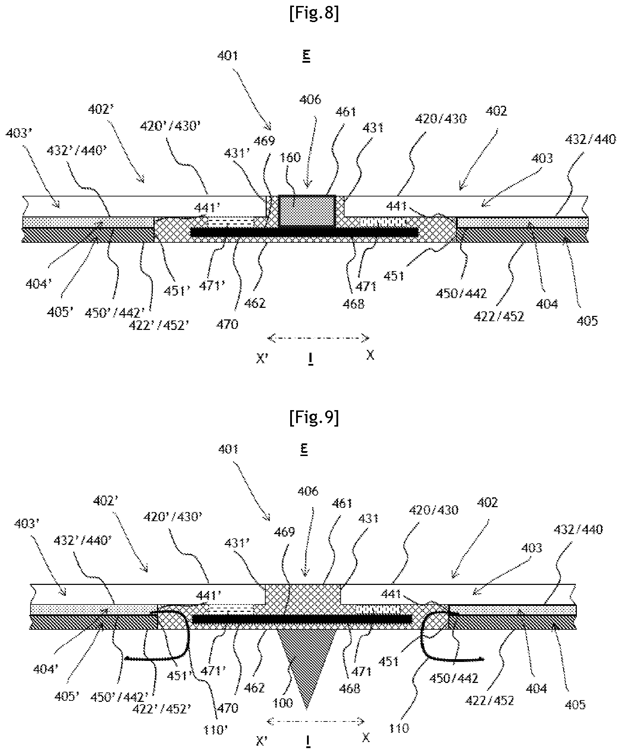

La figure 8 illustre par ailleurs qu'il est possible de prévoir que l'insert 468 comporte un système de liaison mécanique pour permettre la fixation et le démontage d'un accessoire tel qu'une pièce de finition, un enjoliveur, un spoiler ou telle une pièce électronique comme une pièce de feu de signalisation ou une pièce de système de guidage du véhicule (par ex. LIDAR).

La figure 9 illustre par ailleurs qu'il est possible de prévoir que le vitrage selon l'invention comporte un cordon de colle unique 100 sous la face intérieure 62 du joint 6, 206, 406, 606, 706. Cela permet un gain de dimensionnement d'une traverse intérieure et par conséquent une diminution du poids du véhicule équipé du vitrage.

En outre, avec un cordon de colle unique 100, il est alors possible de faire passer un ou plusieurs connecteurs électriques 110, 110' depuis l'espace intérieur vers le vitrage de chaque côté du cordon de colle unique 100 sans avoir à le traverser, et donc, sans risque de dégrader ses qualités.

La figure 5 illustre un cinquième mode de réalisation de l'invention représentant une alternative au quatrième mode de réalisation. Par conséquent, afin d'éviter une description redondante, les éléments et références communs avec le quatrième mode de réalisation ne sont pas décrits à nouveau dans la description de ce cinquième mode de réalisation. Ainsi, le vitrage 501 comporte un premier adhésif double face 571 disposé entre la face extérieure 469 de l'insert 468 et la face intérieure 432 de la feuille de verre extérieure 403 de la première vitre 402, qui se trouve au final à l'intérieur du joint 406. Le vitrage 501 comporte également un second adhésif double face 571' disposé entre la face extérieure 469 de l'insert 468 et la face intérieure 432' de la feuille de verre extérieure 403' de la seconde vitre 402', qui se trouve aussi au final à l'intérieur du joint 406. Par exemple, l'adhésif double face mis en oeuvre comporte un support en polyéthylène enduit d'acrylique ; ce peut être aussi par exemple une couche de colle à base de polyuréthane. Cette configuration permet de renforcer la rigidité et la résistance mécanique du joint 406.

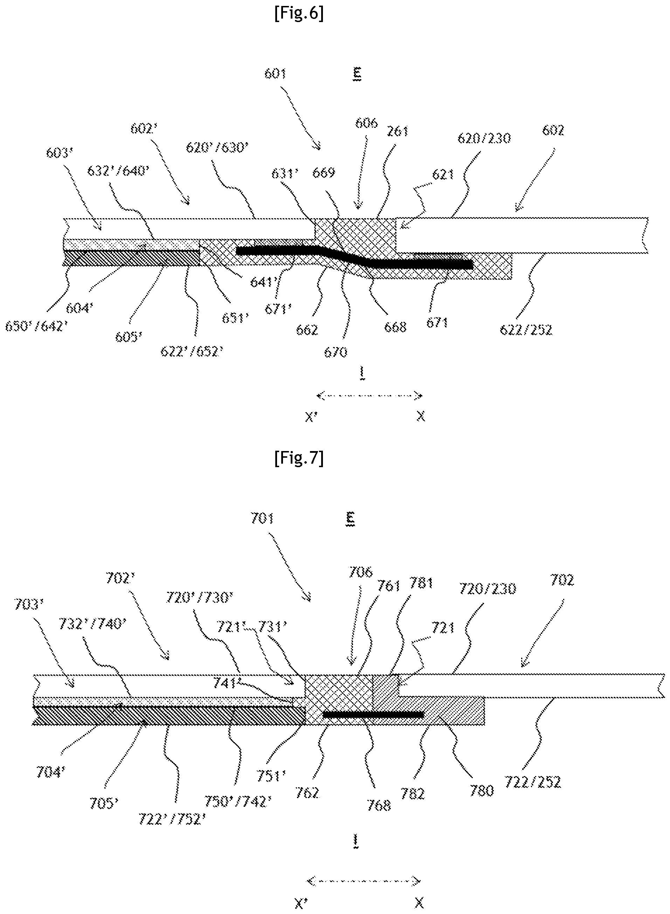

En référence désormais à la figure 6, il est illustré schématiquement un vitrage 606 selon un sixième mode de réalisation de l'invention. Le vitrage 606 comprend une première vitre 602 et une seconde vitre 602'. La première vitre 602 est une feuille de verre monolithique comportant une face extérieure 620 orientée vers l'espace extérieur E, une face intérieure 622 vers l'espace intérieur I et un chant 621 périphérique situé entre ces deux faces. La deuxième vitre 602' est une vitre feuilletée comportant une face extérieure 620' orientée vers l'espace extérieur E, une face intérieure 622' vers l'espace intérieur I. La deuxième vitre 602' comporte, de l'extérieur vers l'intérieur, au moins : une feuille de verre extérieure 603', une feuille intercalaire de matière plastique 604' et une feuille de verre intérieure 605' ; toutefois, il est possible qu'au moins une autre feuille soit intercalée entre la feuille de verre extérieure 603' et la feuille intercalaire de matière plastique 604' ou entre la feuille intercalaire de matière plastique 604' et la feuille de verre intérieure 605'. Il est représenté un chant 621 droit. En alternative, le chant 221 est arrondi. La feuille de verre extérieure 603' présente une face extérieure 630' qui est orientée vers l'espace extérieur E et correspondant ainsi à la face extérieure 620' de la vitre 602', une face intercalaire 632' qui est orientée vers la feuille intercalaire de matière plastique 604', et un chant 631' situé entre ces deux faces. Cette configuration de la figure 6 est particulièrement appropriée pour une liaison entre une vitre feuilletée et une vitre monolithique en matière plastique ou en verre trempé thermiquement.

La feuille de verre intérieure 605' présente une face intercalaire 650' qui est orientée vers la feuille intercalaire de matière plastique 604', une face intérieure 652' qui est orientée vers l'espace intérieur I et correspondant ainsi à la face intérieure 622' de la vitre 602', et un chant 651' situé entre ces deux faces.

La feuille intercalaire de matière plastique 604' présente une face intercalaire extérieure 640' qui est orientée vers la face intercalaire 632' et qui est ici au contact de cette face intercalaire 632', une face intercalaire intérieure 642' qui est orientée vers la face intercalaire 650' et qui est ici au contact de cette face intercalaire 650', ainsi qu'un chant 641' qui est situé entre ces deux faces intercalaires 640', 642'.

La vitre 602' présente ainsi une face extérieure réalisée par la face extérieure 630' de la feuille de verre extérieure 603', une face intérieure réalisée par la face intérieure 652' de la feuille de verre intérieure 605' et un chant situé entre ces deux faces, correspondant au chant 631' de la feuille de verre extérieure 603' et au chant 651' de la feuille de verre intérieure 605', ces deux chants étant ici dans la continuité l'un de l'autre tout en étant séparés par un espace correspondant à l'épaisseur de la feuille de matière plastique 604'.

Le vitrage 601 comporte en outre un joint 606 présentant les caractéristiques décrites dans le deuxième mode de réalisation. Ainsi, ces caractéristiques ne sont pas décrites à nouveau pour la description de ce sixième mode de réalisation. Les chants 641', 651' de la feuille intercalaire 604' et de la feuille de verre intérieure 605' de la seconde vitre 602' sont en retrait par rapport au chant 631' de la feuille de verre extérieure 603' de la seconde vitre 602'. Ces retraits permettent au joint 606 d'être en contact avec la face intérieure 632' de la feuille de verre extérieures 603'. La face intérieure 662 du joint 606 présente une inclinaison et comporte un insert 668 présentant les caractéristiques de l'insert décrit dans le cinquième mode de réalisation. Ainsi, le vitrage 601 comporte un premier adhésif double face 671 disposé entre la face extérieure 669 de l'insert 668 et la face intérieure 622 de la première vitre 602, qui se trouve au final à l'intérieur du joint 406. Le vitrage 601 comporte également un second adhésif double face 671' disposé entre la face extérieure 669 de l'insert 668 et la face intérieure 632' de la feuille de verre extérieure 603' de la seconde vitre 602' qui se trouve au final à l'intérieur du joint 406.

En référence maintenant à la figure 7, il est illustré schématiquement un vitrage 701 selon un septième mode de réalisation de l'invention. Le vitrage 701 comprend une première vitre 702 et une seconde vitre 702'. La première vitre 702 est une feuille de verre monolithique comportant une face extérieure 720 orientée vers l'espace extérieur E, une face intérieure 722 vers l'espace intérieur I et un chant 721 périphérique situé entre ces deux faces. La deuxième vitre 702' est une vitre feuilletée comportant une face extérieure 720' orientée vers l'espace extérieur E, une face intérieure 722' vers l'espace intérieur I et un chant 721' périphérique situé entre ces deux faces. La deuxième vitre 702' comporte, de l'extérieur vers l'intérieur, au moins : une feuille de verre extérieure 703', une feuille intercalaire de matière plastique 704' et une feuille de verre intérieure 705' ; toutefois, il est possible qu'au moins une autre feuille soit intercalée entre la feuille de verre extérieure 703' et la feuille intercalaire de matière plastique 704' ou entre la feuille intercalaire de matière plastique 704' et la feuille de verre intérieure 705'. Il est représenté des chants 721, 721' droits. En alternative, les chants 721, 721' sont arrondis. La feuille de verre extérieure 703' présente une face extérieure 730' qui est orientée vers l'espace extérieur E et correspondant ainsi à la face extérieure 720' de la vitre 702', une face intercalaire 732' qui est orientée vers la feuille intercalaire de matière plastique 704', et un chant 731' situé entre ces deux faces. Cette configuration de la figure 7 est particulièrement appropriée pour une liaison entre une vitre feuilletée et une vitre monolithique en matière plastique ou en verre trempé thermiquement qui comporte un joint encapsulé.

La feuille de verre intérieure 705' présente une face intercalaire 750' qui est orientée vers la feuille intercalaire de matière plastique 704', une face intérieure 752' qui est orientée vers l'espace intérieur I et correspondant ainsi à la face intérieure 722' de la vitre 702', et un chant 751' situé entre ces deux faces.

La feuille intercalaire de matière plastique 704' présente une face intercalaire extérieure 740' qui est orientée vers la face intercalaire 732' et qui est ici au contact de cette face intercalaire 732', une face intercalaire intérieure 742' qui est orientée vers la face intercalaire 750' et qui est ici au contact de cette face intercalaire 750', ainsi qu'un chant 741' qui est situé entre ces deux faces intercalaires 740', 742'.

La vitre 702' présente ainsi une face extérieure réalisée par la face extérieure 730' de la feuille de verre extérieure 703', une face intérieure réalisée par la face intérieure 752' de la feuille de verre intérieure 705' et un chant situé entre ces deux faces, correspondant au chant 731' de la feuille de verre extérieure 703' et au chant 751' de la feuille de verre intérieure 705', ces deux chants étant ici dans la continuité l'un de l'autre tout en étant séparés par un espace correspondant à l'épaisseur de la feuille de matière plastique 704'.

Le vitrage 701 comporte en outre un joint 706 présentant les caractéristiques décrites dans le deuxième mode de réalisation. Ainsi, ces caractéristiques ne sont pas décrites à nouveau. Le joint 706 présente une face extérieure 761, une face intérieure 762 et comporte un insert 768. Le vitrage 701 comprend en outre un joint encapsulé 780 en contact avec la première vitre 702. Le joint encapsulé 780 est disposé sur le pourtour de la première vitre 702 et permet d'assurer l'étanchéité, avec, par exemple, la carrosserie du véhicule. L'insert 768 est à la fois intégré au joint 706 et au joint encapsulé 780. Le joint encapsulé 780 présente une face extérieure 781 et une face intérieure 782. La face extérieure 761 du joint 706 est sensiblement affleurante avec la face extérieure 720 de la vitre 702, avec la face extérieure 720' de la vitre 702' et avec la face extérieure 781 du joint encapsulé 780. Ainsi, la face extérieure 761 est sensiblement dans la continuité des faces extérieures 720, 720' de deux vitres 702, 702' ainsi que de la face extérieure 781 du joint encapsulé 780. La face intérieure 762 du joint 706 est dans la continuité de la face intérieure 782 du joint encapsulé 780 et de la face intérieure 722' de la feuille de verre intérieure 705'.

## Revendications

1. Vitrage (1, 201, 301, 401, 501, 601, 701) de moyen de transport, notamment de véhicule, comprenant une première vitre (2) et une seconde vitre (2') contiguës, la seconde vitre (2') étant feuilletée et comporte une feuille de verre extérieure (3'), une feuille de verre intérieure (5') et une feuille intercalaire en matière plastique (4') disposée entre ladite feuille de verre extérieure (3') et ladite feuille de verre intérieure (5'), ledit vitrage présentant une face extérieure (20, 20') et une face intérieure (22, 22'), **caractérisé en ce que** un chant (41') de la feuille intercalaire (4') de ladite seconde vitre (2') est en retrait par rapport à un chant (31') de la feuille de verre extérieure (3') de ladite seconde vitre (2') et ledit vitrage comporte un joint (6, 206, 406, 606, 706) qui est agencé entre ladite première vitre (2) et ladite seconde vitre (2'), ledit joint (6, 206, 406, 606, 706) présentant une face extérieure (61) et une face intérieure (62), la face extérieure (20, 20') dudit vitrage et la face extérieure (61) dudit joint étant affleurantes et ledit joint (6, 206, 406, 606, 706) étant en contact avec une face intérieure (32') de la feuille de verre extérieure (3') de ladite seconde vitre (2').

2. Vitrage (301, 401, 501, 601, 701) selon la revendication 1, **caractérisé en ce que** la face intérieure (22, 22') dudit vitrage (1) et la face intérieure (62) dudit joint (6, 206, 406, 606, 706) sont affleurantes.

3. Vitrage (301, 401, 501, 601, 701) selon la revendication 1 ou 2, **caractérisé en ce que** ledit joint (6, 206, 406, 606, 706) comporte un insert (368, 468, 668, 768).

4. Vitrage (301, 401, 501, 601, 701) selon la revendication 3, **caractérisé en ce que** ledit insert (368, 468, 668, 768) est en un matériau métallique ou plastique, de préférence renforcé par des fibres et notamment des fibres de verre ou de carbone.

5. Vitrage (301) selon l'une quelconque des revendications 3 ou 4, **caractérisé en ce que** ledit insert (368) présente une forme en T.

6. Vitrage (401, 501) selon l'une quelconque des revendications 1 à 5, **caractérisé en ce que** ladite première vitre (402) est feuilletée et comporte une feuille de verre extérieure (3), une feuille de verre intérieure (5) et une feuille intercalaire en matière plastique (4) disposée entre ladite feuille de verre extérieure (3) et ladite feuille de verre intérieure (5), ledit joint (6, 206, 406, 606, 706) étant en contact avec une face intérieure (32) de la feuille de verre extérieure (3) de ladite première vitre (2).

7. Vitrage (401, 501) selon l'une quelconque des revendications 1 à 6, **caractérisé en ce qu'**il comporte un cordon de colle unique (100) sous la face intérieure (62) dudit joint (6, 206, 406, 606, 706).

8. Vitrage (401, 501) selon l'une quelconque des revendications 3 à 7, **caractérisé en ce que** ledit insert (468) présentant une face (469) disposée en vis-à-vis d'une face intercalaire (432') de la feuille de verre extérieure (403') de ladite seconde vitre (402') feuilletée et de préférence en outre en vis-à-vis d'une face intercalaire (432) de la feuille de verre extérieure (403) de ladite première vitre (402) feuilletée.

9. Vitrage (401, 501) selon la revendication 8, **caractérisé en ce que** ledit vitrage (401, 501) comporte au moins un moyen d'adhésion agencé entre ladite face (469) dudit insert (468, 668) et lesdites faces intercalaires (432, 432').

10. Vitrage (401, 501) selon la revendication 9, **caractérisé en ce que** ledit moyen d'adhésion comporte un adhésif double face ou un polymère tel que du polyuréthane.

11. Vitrage (601) selon l'une quelconque des revendications 3 ou 4, **caractérisé en ce que** ladite première vitre (602) est monolithique et présente une face intérieure (622) et ladite feuille de verre extérieure (603') de ladite seconde vitre (602') présente une face intercalaire (632'), ledit insert (668) présentant une face (669) disposée en vis-à-vis de ladite face intérieure (622) de la première vitre (602) et de ladite face intercalaire (632') de ladite seconde vitre (602').

12. Vitrage (701) selon l'une quelconque des revendications 3 ou 4, **caractérisé en ce que** ladite première vitre (702) est monolithique et comporte un joint (780) comprenant ledit insert (768).

## Patentansprüche

1. Verglasung (1, 201, 301, 401, 501, 601, 701) eines Transportmittels, insbesondere eines Fahrzeugs, umfassend eine erste Glasscheibe (2) und eine zweite Glasscheibe (2'), die aneinander angrenzen, wobei die zweite Glasscheibe (2') laminiert ist und eine äußere Glasplatte (3'), eine innere Glasplatte (5') und eine Kunststoffzwischenlage (4') aufweist, die zwischen der äußeren Glasplatte (3') und der inneren Glasplatte (5') angeordnet ist, wobei die Verglasung eine Außenseite (20, 20') und eine Innenseite (22, 22') aufweist,
**dadurch gekennzeichnet, dass** eine Kante (41') der Zwischenlage (4') der zweiten Glasscheibe (2') in Bezug auf eine Kante (31') der äußeren Glasplatte (3') der zweiten Glasscheibe (2') zurückgesetzt ist und die Verglasung eine Dichtung (6, 206, 406, 606, 706) aufweist, die zwischen der ersten Glasscheibe (2) und der zweiten Glasscheibe (2') angeordnet ist, wobei die Dichtung (6, 206, 406, 606, 706) eine Außenseite (61) und eine Innenseite (62) aufweist, wobei die Außenseite (20, 20') der Verglasung und die Außenseite (61) der Dichtung bündig sind und die Dichtung (6, 206, 406, 606, 706) in Kontakt mit einer Innenseite (32') der äußeren Glasplatte (3') der zweiten Glasscheibe (2') steht.

2. Verglasung (301, 401, 501, 601, 701) nach Anspruch 1,
**dadurch gekennzeichnet, dass** die Innenseite (22, 22') der Verglasung (1) und die Innenseite (62) der Dichtung (6, 206, 406, 606, 706) bündig sind.

3. Verglasung (301, 401, 501, 601, 701) nach Anspruch 1 oder 2,
**dadurch gekennzeichnet, dass** die Dichtung (6, 206, 406, 606, 706) einen Einsatz (368, 468, 668, 768) aufweist.

4. Verglasung (301, 401, 501, 601, 701) nach Anspruch 3,
**dadurch gekennzeichnet, dass** der Einsatz (368, 468, 668, 768) aus einem Metall- oder Kunststoffmaterial besteht, das vorzugsweise mit Fasern und insbesondere Glas- oder Kohlenstofffasern verstärkt ist.

5. Verglasung (301) nach einem der Ansprüche 3 oder 4,
**dadurch gekennzeichnet, dass** der Einsatz (368) eine T-Form aufweist.

6. Verglasung (401, 501) nach einem der Ansprüche 1 bis 5,
**dadurch gekennzeichnet, dass** die erste Glasscheibe (402) laminiert ist und eine äußere Glasplatte (3), eine innere Glasplatte (5) und eine Kunststoffzwischenlage (4) aufweist, die zwischen der äußeren Glasplatte (3) und der inneren Glasplatte (5) angeordnet ist, wobei die Dichtung (6, 206, 406, 606, 706) in Kontakt mit einer Innenseite (32) der äußeren Glasplatte (3) der ersten Glasscheibe (2) steht.

7. Verglasung (401, 501) nach einem der Ansprüche 1 bis 6,
**dadurch gekennzeichnet, dass** sie einen einzelnen Klebstoffstrang (100) unter der Innenseite (62) der Dichtung (6, 206, 406, 606, 706) aufweist.

8. Verglasung (401, 501) nach einem der Ansprüche 3 bis 7,
**dadurch gekennzeichnet, dass** der Einsatz (468) eine Fläche (469) aufweist, die gegenüber einer Zwischenfläche (432') der äußeren Glasplatte (403') der zweiten Verbundglasscheibe (402') angeordnet ist und vorzugsweise ferner gegenüber einer Zwischenfläche (432) der äußeren Glasplatte (403) der ersten Verbundglasscheibe (402) angeordnet ist.

9. Verglasung (401, 501) nach Anspruch 8, **dadurch gekennzeichnet, dass** die Verglasung (401, 501) mindestens ein Haftmittel aufweist, das zwischen der Fläche (469) des Einsatzes (468, 668) und den Zwischenflächen (432, 432') angeordnet ist.

10. Verglasung (401, 501) nach Anspruch 9, **dadurch gekennzeichnet, dass** das Haftmittel einen doppelseitigen Klebstoff oder ein Polymer wie Polyurethan umfasst.

11. Verglasung (601) nach einem der Ansprüche 3 oder 4,
**dadurch gekennzeichnet, dass** die erste Glasscheibe (602) monolithisch ist und eine Innenseite (622) aufweist und die äußere Glasplatte (603') der zweiten Glasscheibe (602') eine Zwischenfläche (632') aufweist, wobei der Einsatz (668) eine Fläche (669) aufweist, die gegenüber der Innenseite (622) der ersten Glasscheibe (602) und der Zwischenfläche (632') der zweiten Glasscheibe (602') angeordnet ist.

12. Verglasung (701) nach einem der Ansprüche 3 oder 4,
**dadurch gekennzeichnet, dass** die erste Glasscheibe (702) monolithisch ist und eine Dichtung (780) umfasst, die den Einsatz (768) umfasst.

## Claims

1. A glazed unit (1, 201, 301, 401, 501, 601, 701) for means of transport, in particular a vehicle, comprising a first glass pane (2) and a second glass pane (2') that are contiguous, the second glass pane (2') being laminated and includes an exterior glass sheet (3'), an interior glass sheet (5') and a plastic material interlayer (4') arranged between said exterior glass sheet (3') and said interior glass sheet (5'), said glazed unit having an exterior face (20, 20') and an interior face (22, 22'), **characterized in that** an edge surface (41') of the interlayer (4') of said second glass pane (2') is set back relative to an edge surface (31') of the exterior glass sheet (3') of said second glass pane (2') and said glazed unit includes a seal (6, 206, 406, 606, 706) that is arranged between said first glass pane (2) and said second glass pane (2'), said seal (6, 206, 406, 606, 706) having an exterior face (61) and an interior face (62), the exterior face (20, 20') of said glazed unit and the exterior face (61) of said seal being flush and said seal (6, 206, 406, 606, 706) being in contact with an interior face (32') of the exterior glass sheet (3') of said second glass pane (2').

2. The glazed unit (301, 401, 501, 601, 701) according to claim 1, **characterized in that** the interior face (22, 22') of said glazed unit (1) and the interior face (62) of said seal (6, 206, 406, 606, 706) are flush.

3. The glazed unit (301, 401, 501, 601, 701) according to claim 1 or 2, **characterized in that** said seal (6, 206, 406, 606, 706) includes an insert (368, 468, 668, 768).

4. The glazed unit (301, 401, 501, 601, 701) according to claim 3, **characterized in that** said insert (368, 468, 668, 768) is made of a metallic or plastic material, preferably reinforced by fibers, and in particular glass or carbon fibers.

5. The glazed unit (301) according to any one of claims 3 or 4, **characterized in that** said insert (368) is T-shaped.

6. The glazed unit (401, 501) according to any one of claims 1 to 5, **characterized in that** said first glass pane (402) is laminated and includes an exterior glass sheet (3), an interior glass sheet (5) and a plastic material interlayer (4) arranged between said exterior glass sheet (3) and said interior glass sheet (5), said seal (6, 206, 406, 606, 706) being in contact with an interior face (32) of the exterior glass sheet (3) of said first glass pane (2).

7. The glazed unit (401, 501) according to any one of claims 1 to 6, **characterized in that** it includes a single bead of adhesive (100) under the interior face (62) of said seal (6, 206, 406, 606, 706).

8. The glazed unit (401, 501) according to any one of claims 3 to 7, **characterized in that** said insert (468) having a face (469) arranged facing an interlayer face (432') of the exterior glass sheet (403') of said laminated second glass pane (402') and preferably further facing an interlayer face (432) of the exterior glass sheet (403) of said laminated first glass pane (402).

9. The glazed unit (401, 501) according to claim 8, **characterized in that** said glazed unit (401, 501) includes at least one adhesion means arranged between said face (469) of said insert (468, 668) and said interlayer faces (432, 432').

10. The glazed unit (401, 501) according to claim 9, **characterized in that** said adhesion means includes a double-sided adhesive or a polymer such as polyurethane.

11. The glazed unit (601) according to any one of claims 3 or 4, **characterized in that** said first glass pane (602) is monolithic and has an interior face (622) and said exterior glass sheet (603') of said second glass pane (602') has an interlayer face (632'), said insert (668) having a face (669) arranged facing said interior face (622) of the first glass pane (602) and said interlayer face (632') of said second glass pane (602').

12. The glazed unit (701) according to any one of claims 3 or 4, **characterized in that** said first glass pane (702) is monolithic and includes a seal (780) comprising said insert (768).
